Europäisches Patentamt

European Patent Office

Office européen des brevets

(19)

(11) Veröffentlichungsnummer: **0 159 554**
**B1**

(12) **EUROPÄISCHE PATENTSCHRIFT**

(45) Veröffentlichungstag der Patentschrift: **16.08.90**

(51) Int. Cl.⁵: **H 02 G 3/04**

(21) Anmeldenummer: **85103554.3**

(22) Anmeldetag: **26.03.85**

(54) **Geräteeinbaueinheit für Sockelleisten-Installationskanäle.**

(30) Priorität: **31.03.84 DE 3412038**

(43) Veröffentlichungstag der Anmeldung:
**30.10.85 Patentblatt 85/44**

(45) Bekanntmachung des Hinweises auf die
Patenterteilung:
**16.08.90 Patentblatt 90/33**

(84) Benannte Vertragsstaaten:
**AT BE CH DE FR GB IT LI NL SE**

(56) Entgegenhaltungen:
**AU-B- 25 369**
**DE-A-2 052 438**
**DE-A-2 852 483**
**FR-A-1 356 649**
**FR-A-1 552 492**
**FR-A-2 318 488**
**FR-A-2 488 064**
**FR-E- 85 876**

(73) Patentinhaber: **TEHALIT Kunststoffwerk GmbH**
**Postfach 128**
**D-6751 Heltersberg/Pfalz (DE)**

(72) Erfinder: **Pollak, Gottfried, Dipl.-Ing (FH)**
**Finkenweg 2**
**D-6757 Waldfischbach-Burgalben (DE)**

(74) Vertreter: **Patentanwälte Dipl.-Ing. F.W. Möll**
**Dipl.-Ing. H.Ch. Bitterich**
**Langstrasse 5 Postfach 2080**
**D-6740 Landau/Pfalz (DE)**

Courier Press, Leamington Spa, England.

EP 0 159 554 B1

**Beschreibung**

Die Erfindung betrifft eine Geräteeinbaueinheit für Sockelleisten-Installationskanäle gemäß dem Oberbegriff des Anspruchs 1.

Sockelleisten-Installationskanäle sind meist aus Kunststoff hergestellte, ein Unterteil und ein aufschnappbares Oberteil aufweisende Kabelführungskanäle, die in verschiedenen Kammern Stark- und Schwachstromleitungen aufnehmen und sie geordnet und geschützt zu den Entnahmestellen führen. Die Möglichkeit, Geräteträger mit Stark- oder Schwachstromgeräten an praktisch jeder Stelle des Installationskanals anordnen zu können, macht diese Art der Elektro-Installation sehr flexibel. Hinzu kommt die saubere Montage sowie die Anwendbarkeit sowohl bei der Modernisierung von Altbauten, als auch bei der Erstausrüstung von Neubauten.

Eine für die Montage an Sockelleisten-Installationskanälen geeignete Geräteeinbaueinheit der eingangs genannten Art ist bekannt aus der FR-A-24 88 064. Sie besteht aus einem Unterteil und einem Oberteil. Das Unterteil wird über dem Installationskanal an der Wand befestigt. Dazu sind Öffnungen vorgesehen. Das Oberteil besteht im wesentlichen aus flachen Platten, die mit Hilfe von Rastnasen und Schrauben bzw. Gewindebohrungen auf dem Unterteil befestigt werden. Das Installationsgerät wird im Oberteil montiert. Das Oberteil wird mit mehreren Schrauben mit dem Unterteil verbunden.

An der Unterseite des Unterteils ist eine Art Schürze vorgesehen, die das Unterteil des Installationskanals übergreift. Dank einer vorbereiteten Bohrung kann die Schürze mit dem Unterteil des Installationskanals verschraubt werden, um so die Stabilität der Geräteeinbaueinheit zu verbessern.

Die Tatsache, daß Sockelleisten-Installationskanäle unmittelbar im Bodenbereich montiert werden, hat für den die Montage ausführenden Handwerker auch gewisse Nachteile. Er muß sämliche Arbeitsgänge auf dem Boden kniend durchführen. Während das Anbringen der Sockelleisten, das Einlegen der Kabel und das Befestigen der Geräteträger noch relativ problemos vor sich geht, macht die Verdrahtung der Geräte, z.B. Steckdosen, Schwierigkeiten. Zunächst müssen die Kabel entmantelt und die Drahtenden abisoliert werden. Dann müssen die Drähte unter die entsprechenden Klemmen des Gerätes geklemmt und das Gerät an den Geräteträger geschraubt werden. Anschließend wird das haubenartige Oberteil aufgesetzt und mit der Zentralscheibe bzw. Zentralplatte des Gerätes gesichert.

Aus der DE-A-20 52 438 ist eine weitere Geräteeinbaueinheit für Sockelleisten-Installationskanäle bekannt. Diese wird mit Hilfe von speziellen Befestigungsklammern nur mit dem Unterteil des Installationskanals verschraubt. In der Wand der Geräteeinbaueinheit sind spezielle Taschen vorgeformt, in die Einsteckklemmen eingesteckt werden, wenn Installationskanal, Geräteeinbaueinheit und elektrisches Installationsgerät industriell vormontiert, d.h. elektrisch und mechanisch miteinander verbunden werden.

Ein weiterer gewisser Nachteil der bekannten Ausführung besteht darin, daß für die Montage unterschiedlich hoher Sockelleisten-Installationskanäle haubenartige Oberteile mit unterschiedlich hohem Ausschnitt bereitgehalten werden müssen, was die Lagerhaltung erschwert.

Ausgehend von diesem Stand der Technik liegt der vorliegenden Erfindung die Aufgabe zugrunde, eine Geräteeinbaueinheit der eingangs genannten Art dahingehend zu verbessern, daß die Montagearbeit auf der Baustelle erheblich reduziert werden kann und daß auch bei unterschiedlich hohen Sockelleisten-Installationskanälen nur ein Typ von Oberteil benötigt wird.

Diese Aufgabe wird gelöst durch eine gattungsgemäße Geräteeinbaueinheit mit den Merkmalen gemäß Kennzeichen des Anspruchs 1.

Damit ergeben sich die Vorteile, daß herausgeführte, andere Kabel kreuzende kabel durch die Schürze gegeneinander isoliert werden, daß zur endgültigen Verdrahtung nur noch Steckverbindungen an den Kabelsteckklemmen vorgenommen werden müssen, während die Verdrahtung zwischen den Geräten und den Kabelsteckklemmen entweder in der Fabrik des Herstellers oder aber in der Werkstatt des Handwerkers vorgenommen werden kann, daß zur Anpassung an unterschiedliche Sockelleisten-Höhen lediglich zwei seitliche Schieber eingesteckt oder herausgenommen werden müssen und daß die Befestigung des Oberteils am Unterteil mit Hilfe einer gesonderten Halteschraube besonders kräftig ausgeführt werden kann, so daß eine eindeutige Trennung zwischen der Befestigung des Oberteils am Unterteil des Geräteträgers und der Befestigung der Zentralscheibe bzw. Zentralplatte am Gerät möglich ist.

Dank der speziellen Ausgestaltung der Taschen mit starren und federnden Wandteilen und mit angeformter Haltenase sitzen die Kabelsteckklemmen sicher am Unterteil der Geräteeinbaueinheit, können jedoch bei Bedarf, beispielsweise zum Lösen der Drahtverbindungen, aus dem Taschen herausgezogen werden, ohne daß Beschädigungen zu befürchten sind.

Gemäß einer vorteilhaften Weiterbildung sind an der Schürze in Höhe der die Kabel führenden Kanäle des Sockelleisten-Installationskanals ausbrechbare Kabelführungen angeformt. Es handelt sich hierbei um etwa U-förmige Schwachstellen, an denen ein Teil des Schürzenmaterials herausgebrochen werden kann. Durch die Führung, die das Kabel in diesen U-förmigen Aussparungen erhält, wird die Trennfunktion und zusätzliche Isolierung bei Kabelüberkreuzungen im Bereich der Geräteeinbaueinheit gewährleistet.

Gemäß einer weiteren Ausgestaltung der Erfindung sind an der Rückseite der Schürze Höhenabstandhalter angeformt. Diese Höhenabstandhalter gewährleisten bei unterschiedlich hohen Sockelleisten-Installationskanälen den richtigen Abstand zwischen Geräteträger und Sockelleiste.

Auch diese Höhenabstandhalter sind bei Bedarf abbrechbar.

Für den Fall, daß mehrere Geräteeinbaueinheiten lückenlos nebeneinander montiert werden sollen, sind an der Schürze Seitenabstandhalter angeformt. Diese Seitenabstandhalter verschwinden in den Sockelleisten-Installationskanälen und sind von außen nicht sichtbar.

Gemäß einer bevorzugten Weiterbildung der Erfindung sind die Befestigungsöffnungen am Unterteil der Geräteeinbaueinheit als Langlöcher mit umlaufendem Verstärkungsring ausgebildet. Diese Verstärkungsringe erhöhen nicht nur die Stabilität des Unterteils, insbesondere im Bereich der Befestigungsschrauben, sondern zentrieren gleichzeitig das Oberteil zum Unterteil während der Montage desselben.

Gemäß einer bevorzugten Weiterbildung ist die Oberseite der am Unterteil der Geräteeinbaueinheit vorgesehenen Podeste, an denen die Geräte montiert werden, abgeschrägt. Die Abschrägung ist so vorgenommen, daß die Frontfläche des Gerätes im montierten Zustand leicht nach oben geneigt ist, beispielsweise unter einem Winkel von 15°, wodurch die Bedienbarkeit verbessert wird. Selbstverständlich muß bei einer solchen Ausgestaltung auch die Frontseite des haubenartigen Oberteils entsprechend geneigt sein.

Um die Montage auf der Baustelle weiter zu erleichtern, ist vor der Gewindebohrung für die Halteschraube eine wannenartige Einführhilfe angeformt. Beim Aufsetzen des haubenartigen Oberteils auf das fertig montierte und verdrahtete Unterteil kommt die in die frontseitige Öffnung des Oberteils eingesetzte, vorzugsweise unverlierbare Halteschraube sozusagen automatisch vor die zugehörige Gewindebohrung und braucht nur noch eingeschraubt zu werden.

Gemäß einer bevorzugten Weiterbildung der Erfindung ist die Öffnung im Oberteil, die die Halteschraube aufnimmt, in einer Vertiefung der Vorderfront versenkt angeordnet. Hierdurch ist die Halteschraube gegen unbeabsichtigte Beschädigungen usw. geschützt.

Die Führung auf der Innenseite der Seitenwände des Oberteils, die die Abdeckschieber zum Ausgleich unterschiedlich hoher Sockelleisten-Installationskanäle aufnimmt, ist vorzugsweise durch zwei parallele, L-förmige Leisten gebildet. Diese Ausgestaltung vereinigt einfache Herstellbarkeit im Spritzgußverfahren mit optimaler Funktionalität.

Gemäß einer bevorzugten Weiterbildung der Erfindung ist in der Vorderfront des Oberteils ein vertiefter Ausschnitt vorgesehen, der zur Aufnahme von Abdeckplatten mit an die verwendeten Geräte angepaßter Öffnung dient. Damit ist eine weitere Vereinfachung der Lagerhaltung möglich, da nur noch eine Art von haubenartigem Oberteil hergestellt und gelagert werden muß, unabhängig davon, welche Art von Gerät — mit Zentralscheibe, mit Zentralplatte, nach deutscher Norm, nach ausländischer Norm, normenlos usw. — später verwendet werden soll.

Anhand der Zeichnung soll die Erfindung in Form von Ausführungsbeispielen näher erläutert werden.

Es zeigen

Fig. 1 eine Draufsicht auf eine erste Ausführungsform eines Unterteils,

Fig. 2 eine Seitenansicht des Unterteils der Fig. 1,

Fig. 3 eine Draufsicht auf das Unterteil der Fig. 1 mit montiertem Gerät,

Fig. 4 eine Seitenansicht des Unterteils der Fig. 3,

Fig. 5 einen Querschnitt durch ein haubenartiges Oberteil, passend zum Unterteil der Fig. 1-4,

Fig. 6 eine Draufsicht auf die Innenseiten des haubenartigen Oberteils der Fig. 5,

Fig. 7 eine Draufsicht auf eine weitere Ausführungsform eines Unterteils,

Fig. 8 eine Draufsicht auf ein haubenartiges Oberteil, passend zum Unterteil der Fig. 7,

Fig. 9 eine Seitenansicht des Oberteils der Fig. 8,

Fig. 10 eine Draufsicht auf eine Abdeckplatte, passend für das Oberteil der Fig. 8 und

Fig. 11 in perspektivischer Darstellung einen Sockelleisten-Installationskanal mit montierter Geräteeinbaueinheit.

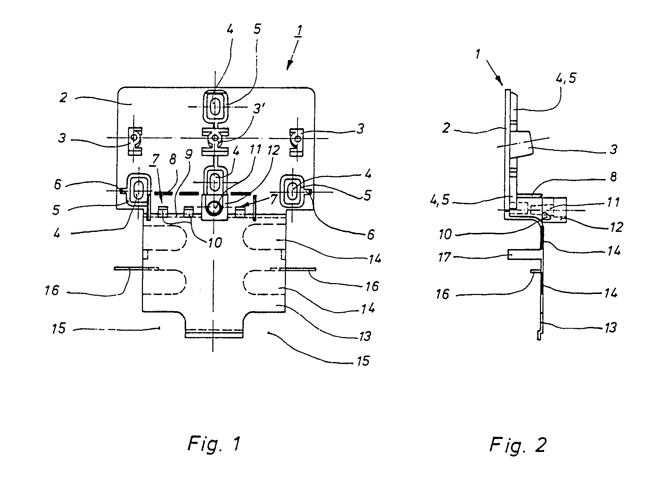

Fig. 1 zeigt eine Draufsicht auf ein Geräteträger-Unterteil 1 einer Geräteeinbaueinheit für Sockelleisten-Installationskanäle. Man erkennt eine flache Bodenplatte 2, auf der Podeste 3, 3' angeordnet sind, auf denen später elektrische Installationsgeräte — Steckdosen, Schalter, Telefonanschlüsse usw. — montiert werden.

Langlöcher 4 in der Bodenplatte 2 dienen zur Befestigung des Unterteils 1 an der Wand. Um die Langlöcher 4 herum sind Verstärkungsringe 5 vorgesehen, die die Stabilität der Bodenplatte 2 im Bereich der Befestigungslöcher 4 erhöhen und gleichzeitig — gegebenenfalls unter Mitwirkung von speziellen angeformten Rippen 6 — das Oberteil der Geräteeinbaueinheit beim Aufsetzen zentrieren.

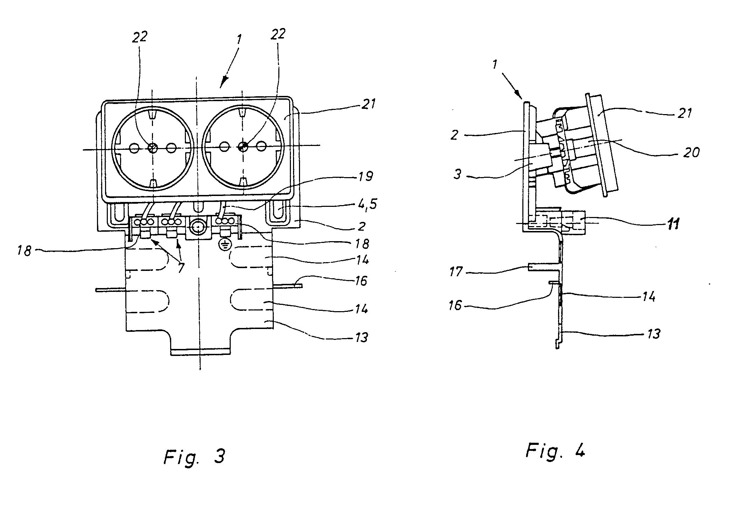

Auf der Bodenplatte 2 erkennt man Taschen 7, gebildet durch federnde Wandabschnitte 8, starre Wandabschnitte 9 und Haltenasen 10. In diese Taschen 7 werden - wie anhand der Fig. 3 noch erläutert werden wird — Kabelsteckklemmen eingesetzt.

Schließlich erkennt man auf der Bodenplatte 2 eine Gewindebohrung 11 in Form einer in den Kunststoff eingespritzten Metallhülse, die später die Verbindung mit dem haubenartigen Oberteil der Geräteeinbaueinheit übernimmt. Vor der Gewindehülse 11 erkennt man ein wannenartiges Kunststoffteil 12, welches das Einführen der Verbindungsschraube in die Gewindehülse 11 erleichtert.

An der Unterseite der Bodenplatte 2 erkennt man eine einstückig angeformte Schürze 13, die — wie insbesondere Fig. 2 erkennen läßt — so abgewinkelt ist, daß sie das Unterteil eines Sockelleisten-Installationskanals überdeckt. Ausbrechbare, U-förmige Kabelführungen 14 sind an beiden Seiten der Schürze 13 angeformt. Diese ausbrechbaren Kabelführungen 14 und ebenso die bereits angeformten entsprechenden Kabelführungen 15 dienen dazu, die Leitungen bei der Umlenkung aus dem (nicht dargestellten) Unterteil des Sockelleisten-Installationskanals nach oben zum Geräteträger 1 zu führen, wobei die Schürze 13 die zusätzliche Isolation der sich kreuzenden Kabel- und Leitungsstränge sicherstellt.

An der Schürze 13 sind seitlich Seitenabstandhalter 16 angeformt. Werden mehrere Unterteile 1 so nebeneinander angeordnet, daß die Seitenabstandhalter sich jeweils berühren, ergibt sich eine lückenlose Aneinanderreihung der Geräteeinbaueinheiten.

Wie Fig. 2 ferner zeigt, sind an der Rückseite der Schürze 13 Höhenabstandhalter 17 ausbrechbar angeformt. Wird das Unterteil 1 zusammen mit einer niedrigen Sockelleiste verwendet, wird der Höhenabstandhalter 17 auf das Unterteil der Sockelleiste aufgesetzt. Wird das Unterteil 1 zusammen mit einer hohen Sockelleiste verwendet, werden die Höhenabstandhalter 17 abgebrochen und der waagrecht verlaufende Schenkel der Schürze 13 auf das Unterteil der Sockelleiste direkt aufgesetzt. In beiden Fällen ergeben sich so die richtigen Abstände zwischen Sockelleiste und Geräteeinbaueinheit.

Wie Fig. 2 erkennen läßt, ist die Oberseite der Podeste 3 unter einem Winkel von 10° bis 15° schräg nach hinten geneigt. Dadurch erhält auch das auf dem Podest 3 befestigte elektrische Installationsgerät dieselbe, nach hinten geneigte Lage, so daß es trotz der Montage an der Sockelleiste gut zugänglich ist.

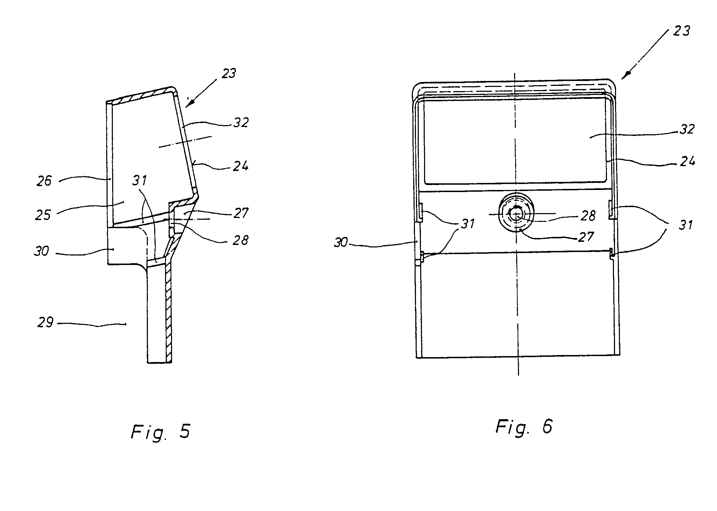

Die Fig. 3 und 4 zeigen den Geräteträger 1 der Fig. 1 und 2 in Draufsicht und Seitenansicht, jedoch mit einem bereits montierten elektrischen Installationsgerät, hier einer Schutzkontakt-Doppelsteckdose 20. Die Steckdose 20 ist in herkömmlicher Technik mit den Podesten 3 verschraubt. Die Zentralscheibe 21 ist mit Hilfe von Schrauben 22 auf dem Gerät 20 aufgeschraubt. In die Taschen 7 sind Kabelsteckklemmen 18 eingesetzt. Das Installationsgerät 20 ist mit Drähten 19 bis zu den Kabelsteckklemmen 18 vorverdrahtet. Sobald der Geräteträger 1 über der Sockelleiste montiert ist, werden die Enden der in der Sockelleiste geführten Leitungen nur noch in die Kabelsteckklemmen 18 eingesteckt. Weitere Verdrahtungsarbeit ist nicht nötig.

Fig. 5 zeigt einen Schnitt durch ein haubenartiges Oberteil 23, welches zum Aufsetzen auf den Geräteträger der Fig. 1 bis 4 bestimmt ist. Man erkennt eine schräg nach hinten geneigte Frontfläche 24 mit einem Ausschnitt 32 entsprechend der Zentralscheibe 21 des elektrischen Installationsgerätes 20.

Man erkennt ferner unterhalb des Ausschnitts 32 eine in die Frontseite eingeformte Vertiefung 27, an deren Boden eine Öffnung 28 vorgesehen ist, durch die eine vorzugsweise unverlierbare Befestigungsschraube durchsteckbar ist.

Im unteren Bereich der Seitenwand 25 des haubenartigen Oberteils 23 erkennt man eine Aussparung 29 entsprechend dem (nicht dargestellten) Oberteil des Sockelleisten-Installationskanals. Um dasselbe haubenartige Oberteil 23 zusammen mit Sockelleisten unterschiedlicher Höhe einsetzen zu können, ist ein Schieber 30 vorgesehen, der in eine auf der Innenseite der Seitenwand 25 angeformte Führung 31 einsetzbar ist und bei Bedarf den optischen Höhenausgleich zwischen hohen und niederen Sockelleisten vollendet.

Eine am rückwärtigen Ende des haubenartigen Oberteils 23 angeformte Nut 26 greift über den Umfang des Geräteträgers 2, so daß das Unterteil 1 völlig im Oberteil 23 verschwindet.

Aus der Fig. 6, die einen Blick in das Innere des Oberteils 23 der Fig. 5 zeigt, erkennt man den Ausschnitt 32, der der Zentralscheibe 21 des elektrischen Installationsgerätes 20 entspricht. Zentralscheibe 21 und Ausschnitt 32 sind so aufeinander abgestimmt, daß das haubenartige Oberteil 23 über die Zentralscheibe 21 gesetzt wird.

In Fig. 6 erkennt man auch die L-Form der parallelen Führungsleisten 31, die die Höhenausgleichsschieber 30 aufnehmen.

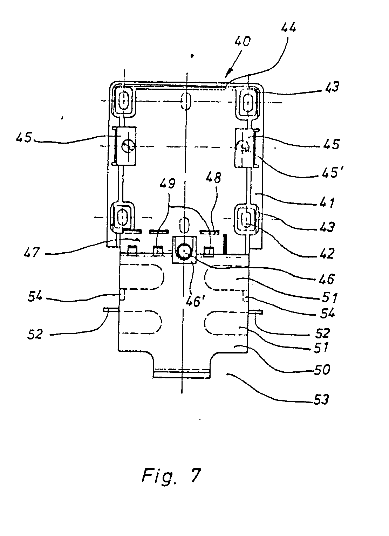

Fig. 7 zeigt eine weitere Ausführungsform eines Geräteträger-Unterteils 40. Dieses Unterteil 40 ist prinzipiell genau so aufgebaut wie das Unterteil 1 der Fig. 1 bis 4; im Unterschied dazu nimmt hier der Geräteträger jedoch ein beliebiges elektrisches Installationsgerät auf, welches gegebenenfalls auch von der Norm abweichende Abmessungen aufweisen kann. Die Befestigung des Gerätes erfolgt mit Hilfe der Podeste 45 und der dort vorgesehenen Schrauben 45'. Zur Montage des Geräteträgers 41 an der Wand dienen als Langloch ausgebildete Befestigungsöffnungen 42 mit umlaufenden Verstärkungsringen 43. Diese Verstärkungsringe 43 dienen zusammen mit Führungsrippen 44 gleichzeitig zur Zentrierung des haubenartigen Oberteils bei der Montage.

Taschen 47 mit federnden Wandabschnitten 48 und Haltenasen 49 nehmen einsteckbare Kabelsteckklemmen auf.

Die an der Unterseite des Geräteträgers 41 angeformte Schürze 50 mit eingeformten Kabeleinführungen 53, ausbrechbaren Kabeleinführungen 51, Seitenabstandhalter 52 und Höhenabstandhalter 54 entspricht der Ausführung der Fig. 1 bis 4.

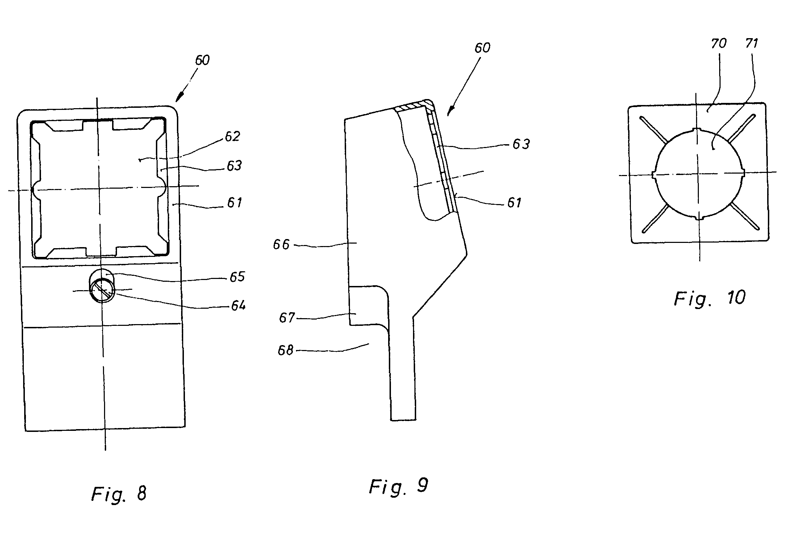

Die Fig. 8 und 9 zeigen in Draufsicht und Seitenansicht ein haubenartiges Oberteil 60, welches zum Aufsetzen auf das Unterteil 40 der Fig. 7 geeignet ist. Auch hier erkennt man die unter einem Winkel von 10° bis 15° nach hinten geneigte Frontfläche 61 sowie den Ausschnitt 62, der den Zugang zu dem elektrischen Installationsgerät gewährleistet. Unterhalb des Ausschnitts 62 erkennt man die Vertiefung 65 und die dort unverlierbar eingesetzte Befestigungsschraube 64. Mit Hilfe der Hohenausgleichsschieber 67 läßt sich der Ausschnitt 68 im unteren Bereich der Seitenwand 66 an die jeweils verwendete Sockelleiste anpassen.

Im Unterschied zu der Ausführungsform der Fig. 5 und 6 ist der Rand 63 des Ausschnitts 62 gegenüber der Frontfläche 61 vertieft. Auf diese Weise kann der Ausschnitt 62 je nach Anwendungsfall mit unterschiedlichen, auch nicht normgerechten Abdeckplatten abgedeckt werden.

Eine solche Abdeckplatte 70 mit einem DINgemäßen Ausschnitt 71 zeigt Fig. 10.

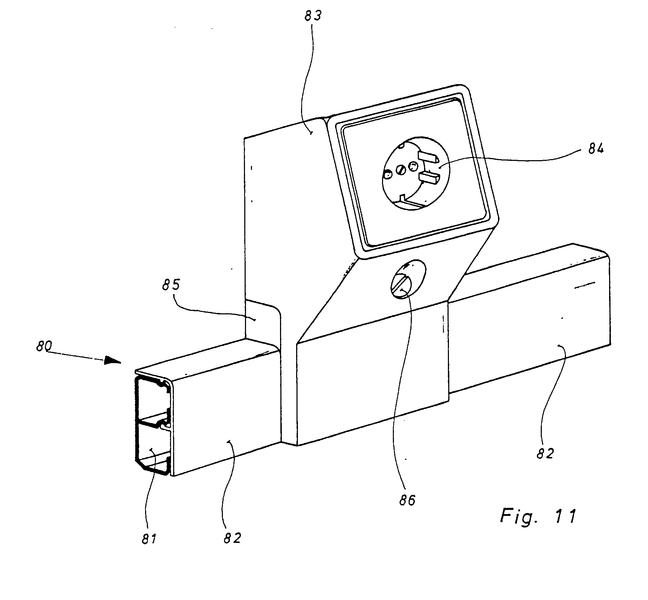

Fig. 11 schließlich zeigt einen Sockelleisten-Installationskanal 80, gebildet aus einem Unterteil 81 und einem Oberteil 82, an dem eine Geräteeinbaueinheit montiert ist, deren Oberteil 83 allein sichtbar ist. Wie man erkennt, ist das elektrische Installationsgerät 84, hier eine Schutzkontakt-Steckdose, leicht nach hinten geneigt, so daß es trotz der Montage an der Unterkante der Wand für eine Bedienungsperson leichter zugänglich ist, als das bei den derzeit üblichen Ausführungsformen möglich ist. In der Seitenwand ist ein Schieber 85 eingesetzt. Die Befestigung des Oberteils am Unterteil erfolgt mit Hilfe der Halteschraube 86.

Abschließend soll nochmals darauf hingewiesen werden, daß die erfindungsgemäße Geräteeinbaueinheit nicht nur ein gefälligeres Aussehen als bekannte Geräte besitzt, sondern daß insbesondere eine Vorverdrahtung der elektrischen Geräte bis zu den Kabelsteckklemmen möglich ist, und zwar — bei Verwendung eines vorgegebenen Gerätes 20 — bereits ab Werk, bei Verwendung beliebiger anderer Geräte in der Werkstatt des Handwerkers. Die Verdrahtungsarbeit auf der Baustelle beschränkt sich somit auf das Abisolieren der Kabelenden und das Einstecken der Drähte in eine Öffnung der Kabelsteckklemmen. Dabei stellt die am Unterteil angeformte Schürze die gewünschte zusätzliche Isolation der sich überkreuzenden Kabel und Leitungen selbsttätig sicher.

**Patentansprüche**

1. Geräteeinbaueinheit für Sockelleisten-Installationskanäle (80), bestehend aus einem Unterteil (1, 40), das Öffnungen (4, 42) für eine Wandbefestigung des Unterteils (1, 40) oberhalb des Installationskanals (80), eine an seiner Unterseite angeformte Schürze (13, 50), die das Unterteil (81) des Installationskanals (80) überdeckt, und eine Gewindebohrung (11, 46) aufweist, und einem Oberteil (23, 60), das auf das Unterteil (1, 40) aufsetzbar ist, den Installationskanal (80) im Bereich der Kabelführung überdeckt und in seiner Vorderfront (24, 61) sowohl einen Ausschnitt (32, 62), der den Zugang zu einem Starkstromoder Schwachstrom-Gerät (20) erlaubt, als auch eine Öffnung (28), die mit der Gewindebohrung (11, 46) am Unterteil (2, 41) fluchtet und eine Halteschraube (64) aufnimmt, aufweist, dadurch gekennzeichnet, daß das Oberteil (23, 60) haubenartig ausgebildet ist, daß an den Seitenwänden (25, 66) des haubenartigen Oberteils (23, 60) je eine Führung (31) angeformt ist, in die je ein Abdeckschieber (30, 67) einsetzbar ist, daß nur eine mit der Gewindebohrung (11, 46) fluchtende zentrale Öffnung (28) und nur eine Halteschraube (64) vorgesehen sind, daß auf dem Unterteil (1, 40) Taschen (7, 47) zur Aufnahme von Kabelsteckklemmen (18) gebildet sind, die federnde und starre Wandteile (8, 9) besitzen, daß an einem der Wandteile (9) eine Haltenase (10) angeformt ist, und daß das Unterteil (1, 40) Podeste (3, 45) für die Montage des Starkstrom- oder Schwachstrom-Gerätes (20) im Bereich des Ausschnitts (32, 62) in der Vorderfront (24, 61) des haubenartigen Oberteils (23, 60) besitzt.

2. Geräteeinbaueinheit nach Anspruch 1, dadurch gekennzeichnet, daß an der Schürze (13, 50) in Höhe der die Kabel führenden Kammern des Sockelleisten-Installationskanals (80) ausbrechbare Kabeldurchführungen (14, 51) angeformt sind.

3. Geräteeinbaueinheit nach Anspruch 2, dadurch gekennzeichnet, daß an der Rückseite der Schürze (13, 50) Höhenabstandhalter (17, 54) angeformt sind.

4. Geräteeinbaueinheit nach Anspruch 2 oder 3, dadurch gekennzeichnet, daß an der Schürze (13, 50) Seitenabstandhalter (16, 52) angeformt sind.

5. Geräteeinbaueinheit nach einem der Ansprüche 1 bis 4, dadurch gekennzeichnet, daß die Öffnungen (4, 42) für die Wandbefestigung des Unterteils (1, 40) als Langlöcher mit umlaufendem Vestärkungsring (5, 43) ausgebildet sind.

6. Geräteeinbaueinheit nach einem der Ansprüche 1 bis 5, dadurch gekennzeichnet, daß die Oberseite der Podeste (3, 45) für die Montage der Geräte (20) nach hinten geneigt ist.

7. Geräteeinbaueinheit nach einem der Ansprüche 1 bis 6, dadurch gekennzeichnet, daß vor der Gewindebohrung (11, 46) für die Halteschraube (64) eine wannenartige Einführhilfe (12, 46') angeformt ist.

8. Geräteeinbaueinheit nach einem der Ansprüche 1 bis 7, dadurch gekennzeichnet, daß die öffnung (28) im Oberteil (23, 60), die die Halteschraube (64) aufnimmt, in einer Vertiefung (27, 65) der Vorderfront (24, 61) versenkt angeordnet ist.

9. Geräteeinbaueinheit nach einem der Ansprüche 1 bis 8, dadurch gekennzeichnet, daß die Führung (31) an den Seitenwänden (25, 66) des haubenartigen Oberteils (23, 60) aus zwei L-förmigen, parallelen Leisten besteht.

10. Geräteeinbaueinheit nach einem der Ansprüche 1 bis 9, dadurch gekennzeichnet, daß in der Vorderfront (61) des Oberteils (60) ein vertiefter Ausschnitt (62, 63) vorgesehen ist, der zur Aufnahme von Abdeckplatten (70) mit an die verwendeten Geräte angepaßter Öffnung (71) dient.

11. Geräteeinbaueinheit nach einem der Ansprüche 1 bis 10, dadurch gekennzeichnet, daß die verwendeten elektrischen Geräte (20) bis zu den Kabelsteckklemmen (18) vorverdrahtet sind.

**Revendications**

1. Unité de montage d'appareil pour gaines d'installation formant plinthe (80), constituée d'une partie inférieure (1, 40) qui présente des ouvertures (4, 42) pour une fixation sur le mur de la partie inférieure (1, 40), au-dessus de la gaine d'installation (80), un tablier (13, 50), formé sur sa face inférieure et qui recouvre la partie inférieure (81) de la gaine d'installation (80), ainsi qu'un trou taraudé (11, 46), et d'une partie supérieure (23, 60) à appliquer sur la partie inférieure (1, 40) et qui recouvre la gaine d'installation (80) dans la région de passage des câbles, et qui présente, sur sa face avant (24, 26), une découpe (32, 62) qui permet l'accès à un appareil à courant fort ou à courant faible (20), ainsi qu'une ouverture (28) qui est alignée avec le trou taraudé (11, 46), pratiqué dans la partie inférieure (2, 41), et loge une vis de fixation (64), caractérisée en ce que la partie supérieure (23, 60) est en forme de capot, en ce qu'on forme sur chacune des parois latérales (25, 66) de la partie supérieure (23, 60) en forme de capot, un organe de guidage (31) dans lequel on peut placer un couvercle coulissant (30, 60), en ce qu'on prévoit uniquement une ouverture centrale (28), alignée avec le trou taraudé (11, 46) et uniquement une vis de fixation (64), en ce qu'on forme, sur la partie inférieure (1, 40), des poches (7, 47) destinées à recevoir des bornes de câbles à fiches (18) et qui présentent des parties de paroi (8, 9) élastiques et rigides, en ce qu'on forme un nez de retenue (10), sur l'une des parties de paroi (9) et en ce que la partie inférieure (1, 40) comporte des plateformes (3, 45) pour le montage de l'appareil à courant fort ou à courant faible (20), dans la région de la découpe (32, 62), pratiquée dans la face avant (24, 61) de la partie supérieure (23, 60) en forme de capot.

2. Unité de montage d'appareil selon la revendication 1, caractérisée en ce qu'on forme sur le tablier (13, 50) des passages de câbles (14, 51) arrachables, à la hauteur des compartiments de la gaine d'installation (80) en forme de plinthe, guidant les câbles.

3. Unité de montage d'appareil selon la revendication 2, caractérisée en ce qu'on forme des écarteurs de hauteur (17, 54), sur la face arrière du tablier (13, 50).

4. Unité de montage d'appareil selon la revendication 2 ou 3, caractérisée en ce qu'on forme sur le tablier (13, 50), des écarteurs latéraux (16, 52).

5. Unité de montage d'appareil selon l'une quelconque des revendications 1 à 4, caractérisée en ce que les ouvertures (4, 42) pour la fixation au mur de la partie inférieure (1, 40), sont des trous oblongs présentant un anneau de renfort (5, 43) continu.

6. Unité de montage d'appareil selon l'une quelconque des revendications 1 à 5, caractérisée en ce que la face supérieure des plate-formes (3, 45), destinées au montage des appareils (20), est inclinée vers l'arrière.

7. Unité de montage d'appareil selon l'une quelconque des revendications 1 à 6, caractérisée en ce qu'on forme un auxiliaire d'introduction (12, 46') en forme de godet, devant le trou taraudé (11, 46), pour la vis de fixation (64).

8. Unité de montage d'appareil selon l'une quelconque des revendications 1 à 7, caractérisée en ce que l'ouverture (28), pratiquée dans la partie supérieure (23, 60) et qui reçoit la vis de fixation (64), est encastrée dans un creux (27, 65) de la face avant (24, 61).

9. Unité de montage d'appareil selon l'une quelconque des revendications 1 à 8, caractérisée en ce que l'organe de guidage (31), situé sur les parois latérales (25, 66) de la partie supérieure (23, 60) en forme de capot, est constitué de deux baguettes parallèles en L.

10. Unité de montage d'appareil selon l'une quelconque des revendications 1 à 9, caractérisée en ce qu'on prévoit, dans la face avant (61) de la partie supérieure (60), une découpe (62, 63) en profondeur qui sert à recevoir des plaques de couverture (70) présentant une ouverture (71), adaptée aux appareils utilisés.

11. Unité de montage d'appareil selon l'une quelconque des revendications 1 à 10, caractérisée en ce que les appareils électriques (20) utilisés sont précâblés jusqu'aux bornes de câble à fiches (18).

**Claims**

1. A device installation unit for skirting board service conduits (80) having a lower part (1, 40) which comprises openings (4, 42) for a wall fixing of the lower part (1, 40) above the service conduit (80), an apron (13, 50) which is moulded to its lower side and which covers the lower part (81) of the service conduit (80), and a threaded bore (11, 46), and having an upper part (23, 60) which can be positioned onto the lower part (1, 40), covers the service conduit (80) in the region of the cable guide, and at its front side (24, 61) contains both a cut-out (32, 62) which allows access to a high-voltage- or low-voltage-device (20) and also an opening (28) which is aligned with the threaded bore (11, 46) of the lower part (2, 41) and receives a retaining screw (64), characterised in that the upper part (23, 60) is dome-shaped, that a respective guide (31), into which a sliding cover (30, 67) can be inserted, is moulded to the side walls (25, 66) of the dome-shaped upper part (23, 60), that only one central opening (28), aligned with the threaded bore (11, 46), and only one retaining screw (64) are provided, that the lower part (1, 40) is provided with pockets (7, 47) which accommodate cable plug terminals (18) having resilient and rigid wall components (8, 9), that a retaining lug (10) is moulded to one of the wall components (9), and that the lower part (1, 40) comprises platforms (3, 45) for the assembly of the high-voltage- or low-voltage-device (20) in the region of the cut-out (32, 62) in the front side (24, 61) of the dome-shaped upper part (23, 60).

2. A device installation unit as claimed in claim 1, characterised in that cable passages (14, 51), which can be broken out at the level of the chambers of the skirting board service conduit (80) which guide the cables, are moulded to the apron (13, 50).

3. A device installation unit as claimed in claim 2, characterised in that vertical spacers (17, 54) are moulded to the rear of the apron (13, 50).

4. A device installation unit as claimed in claim 2 or claim 3, characterised in that lateral spacers (16, 52) are moulded to the apron (13, 50).

5. A device installation unit as claimed in one of the claims 1 to 4, characterised in that the openings (4, 42) for the wall fixing of the lower part (1, 40) consist of slots equipped with a peripheral reinforcing ring (5, 43).

6. A device installation unit as claimed in one of the claims 1 to 5, characterised in that the upper side of the platforms (3, 45) for the assembly of the devices (20) inclines rearwardly.

7. A device installation unit as claimed in one of the claims 1 to 6, characterised in that a trough-like insertion aid (12, 46') is formed in front of the threaded bore (11, 46) for the retaining screw (64).

8. A device installation unit as claimed in one of the claims 1 to 7, characterised in that the opening (28) in the upper part (23, 60), which receives the retaining screw (64), is sunken in a recess (27, 65) of the front side (24, 61).

9. A device installation unit as claimed in one of the claims 1 to 8, characterised in that on the side walls (25, 66) of the dome-shaped upper part (23, 60) the guide (31) comprises L-shaped, parallel strips.

10. A device installation unit as claimed in one of the claims 1 to 9, characterised in that in the front side (61) of the upper part (60) is arranged a recessed cut-out (62, 63) which serves to accommodate covering plates (70) having an opening (71) adapted to the devices being used.

11. A device installation unit as claimed in one of the claims 1 to 10, characterised in that the electric devices (20) which are used are pre-wired up to the cable plug terminals (18).

*Fig. 1*

*Fig. 2*

Fig. 3

Fig. 4

Fig. 5

Fig. 6

Fig. 7

60

62
63
61

65
64

**Fig. 8**

60

63

61

66

67

68

**Fig. 9**

70  71

*Fig. 10*

EP 0 159 554 B1

Fig. 11